# EUROPEAN PATENT SPECIFICATION

(11) **EP 3 819 341 B1**
(45) Date of publication and mention of the grant of the patent: **22.11.2023**
(21) Application number: 19854785.3
(22) Date of filing: 25.07.2019
(51) Int. Cl.: B32B 5/24, B32B 27/06, B32B 27/28, B32B 27/32, B32B 27/36, D06N 3/00, B32B 5/02, B32B 5/08, B32B 5/18, B32B 5/20, B32B 27/40, D06N 3/14, C08L 71/02, C08J 9/30, C08G 18/08, C08G 18/42, C08G 18/44, C08G 18/48, C08G 18/76, C08G 18/79

(54) **URETHANE RESIN COMPOSITION AND LAYERED PRODUCT**
URETHANHARZZUSAMMENSETZUNG UND SCHICHTPRODUKT
COMPOSITION DE RÉSINE D'URÉTHANE ET PRODUIT STRATIFIÉ

(30) Priority: 30.08.2018 JP 2018161501
(43) Date of publication of application: 12.05.2021
(73) Proprietor: DIC Corporation, Tokyo 174-8520 (JP)
(72) Inventor: FUJISHITA, Norie, Takaishi-shi, Osaka 592-0001 (JP); CHIJIWA, Hiroyuki, Takaishi-shi, Osaka 592-0001 (JP)
(74) Representative: Beckmann, Claus
(86) International application number: PCT/JP2019/029196
(87) International publication number: WO 2020/044894

(56) References cited:
- JP-A- H11 323 125
- JP-A- S55 148 265
- JP-A- 2000 345 026
- JP-A- 2001 048 735
- JP-A- 2004 115 712
- JP-A- 2005 146 430
- US-A- 3 989 870
- US-A1- 2004 121 113
- US-A1- 2008 070 999

## Description

### Technical Field

The present invention relates to a urethane resin composition.

### Background Art

Urethane resins have excellent mechanical strength and hand feeling, and are therefore widely used in the production of synthetic leather (including artificial leather). In this application, a solvent urethane resin containing N,N-dimethylformamide (DMF) has been mainly used. However, Europe regulates DMF, China and Taiwan strengthen the VOC emissions control, and the major apparel manufacturers regulate DMF, and, under the circumstances, the urethane resin composition used for layers constituting a synthetic leather is required to be free of DMF.

In this situation, a urethane dispersion (PUD) having a urethane resin dispersed in water is beginning to be studied as a substitute for a conventional solvent urethane resin that is a raw material for an intermediate porous layer, which is formed by subjecting the solvent urethane resin to wet coagulation. With respect to this substitution, for imparting hand feeling equivalent to those of a synthetic leather using a layer produced by wet film formation, the production of a foamed material from a PUD is energetically studied.

With respect to the method for obtaining the foamed material from a PUD, studies are made on, for example, a method of incorporating microcapsules into the PUD, and a mechanical foaming method of dispersing a gas, such as carbon dioxide, in a PUD blend (see, for example, PTL 1). However, the method of incorporating microcapsules has problems in that the obtained foamed material has poor hand feeling, and in that expansion of the microcapsules causes poor smoothness. Further, in the method of dispersing a gas, the bubbles generated in the PUD blend, for example, disappear during the process of producing a foamed material, and hence it is difficult to control the size of bubbles, making it difficult to stably obtain a synthetic leather having excellent hand feeling.

Under the circumstances, in recent years, as a method for obtaining a foamed material with ease, a mechanical foaming method of foaming a PUD by stirring the PUD using a machine is studied. However, the mechanical foaming method has serious problems in that a crack is formed in the urethane film upon drying water in the PUD, or, after the foaming operation, the bubbles in the PUD are gathered together or the PUD is defoamed, so that the resultant film cannot stably exhibit hand feeling and physical properties, such as a peel strength.

JP 2000 345026 A relates to the problem to obtain an emulsion having thermogelling properties and storage stability, which emulsion comprises a polyurethane, specified amounts of a plurality of nonionic surfactants having different HLBs and an aqueous medium. As a solution to the problem, the document describes an emulsion which comprises 100 pbw polyurethane, 5-15 pbw nonionic surfactant having an HLB of 13.0-17.0 and represented by the formula: R-O-(CH₂-CH₂-O-)ₓ-H (wherein R is an alkyl; and x is the number of repeating units), 1-20 pbw nonionic surfactant having an HLB of 8.0-15.0, and an aqueous medium in an amount to give a solids concentration of 10-70 wt.%. According to the document, it is desirable that a film obtained by drying this emulsion at 50 °C has a modulus of elasticity of 2.0 × 10⁷ to 5.0 × 10⁸ dyn/cm². This emulsion is infiltrated into a 0.3-3 mm thick nonwoven fabric, the fabric is squeezed with e.g. a press roll to a resin adhesion amount of 5-150 wt.% based on the fabric, and the emulsion is coagulated in a hot water bath at 70 °C or above and dried to obtain a leathery sheet.

US 2004/121113 A1 describes a synthetic leather which is made by a impregnating a non-woven or woven textile with an aqueous polyurethane dispersion comprised of a nonionizable polyurethane and an external stabilizing surfactant. The impregnated textile is then exposed to water containing a coagulant for a coagulation time sufficient to coagulate the dispersion. The method may be used to form a synthetic leather said to have excellent wet ply adhesion and may contain an insoluble multivalent cation organic acid.sss

### Citation List

### Patent Literature

PTL 1: JP-A-2007-191810

### Summary of Invention

### Technical Problem

A task to be achieved by the present invention is to provide a urethane resin composition containing water, which is advantageous in that a film having excellent crack resistance and excellent hand feeling can be formed from the composition even when mechanically foaming the composition. Solution to Problem

The present invention provides the urethane resin composition defined in claim 1. Further, the present invention provides the layered product defined in claim 6.

### Advantageous Effects of Invention

The urethane resin composition of the present invention contains water and is environmentally friendly. Further, the urethane resin composition of the invention is advantageous in that a film having excellent crack resistance and excellent hand feeling can be formed from the composition even when mechanically foaming the composition. Therefore, the urethane resin composition of the invention can be advantageously used as a material for a synthetic leather, and can be particularly advantageously used as a foamed layer for synthetic leather.

### Description of Embodiments

The urethane resin composition of the present invention is defined in claim 1 and contains, inter alia, a urethane resin (A), water (B), and a specific film forming auxiliary (C) .

In the invention, it is necessary that the urethane resin composition contain the specific film forming auxiliary (C). By using the specific film forming auxiliary (C), the urethane resin composition has excellent retention of foam in the system even after being mechanically foamed, and it is presumed that, by virtue of this, the film formed from the composition can be suppressed in formation of a crack, achieving excellent hand feeling of the film.

It is necessary that, as the film forming auxiliary (C), at least one compound selected from the group consisting of a polyoxyethylene alkyl ether (c-1), a polyoxyethylene sorbitan fatty acid ester (c-2), and a polyglycerol fatty acid ester (c-3) be used.

As the polyoxyethylene alkyl ether (c-1), for example, polyoxyethylene lauryl ether, polyoxyethylene cetyl ether, polyoxyethylene stearyl ether or polyoxyethylene oleyl ether can be used. These compounds may be used individually or in combination. Among these, from the viewpoint of obtaining high hydrophilicity and further excellent retention of foam, crack resistance, and hand feeling, the number of moles added of the structure represented by the formula (1) below is preferably 30 or more, more preferably 50 or more, further preferably 80 or more. Further, the upper limit of the number of moles is preferably 200 or less, more preferably 150 or less, further preferably 130 or less. The number of moles added of the structure represented by the formula (1) below in the component (c-1) is preferably in the range of from 30 to 200, more preferably in the range of from 50 to 150, further preferably in the range of from 80 to 130.

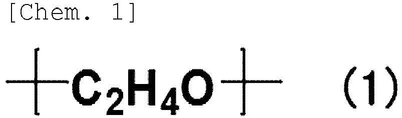

As the polyoxyethylene sorbitan fatty acid ester (c-2), for example, there can be used polyoxyethylene sorbitan monococonut oil fatty acid ester, polyoxyethylene sorbitan monopalmitate, polyoxyethylene sorbitan monostearate, polyoxyethylene sorbitan monolaurate, polyoxyethylene sorbitan monolaurate tristearate or polyoxyethylene sorbitan monolaurate monooleate. These compounds may be used individually or in combination. Among these, from the viewpoint of obtaining high hydrophilicity and further excellent retention of foam, crack resistance, and hand feeling, the number of moles added of the structure represented by the formula (1) is preferably 30 or more, more preferably 50 or more, further preferably 70 or more. Further, the upper limit of the number of moles is preferably 200 or less, more preferably 150 or less, further preferably 100 or less. The number of moles added of the structure represented by the formula (1) below in the component (c-2) is preferably in the range of from 30 to 200, more preferably in the range of from 50 to 150, further preferably in the range of from 70 to 100.

As the polyglycerol fatty acid ester (c-3), for example, there can be used polyglyceryl monocaprate, polyglyceryl monolaurate, polyglyceryl monomyristate, polyglyceryl monooleate, polyglyceryl monostearate, polyglyceryl dioleate, polyglyceryl distearate or polyglyceryl pentaoleate. These compounds may be used individually or in combination. Among these, from the viewpoint of obtaining high hydrophilicity and further excellent retention of foam, crack resistance, and hand feeling, the HLB (Hydrophilic-Lipophilic Balance) value is preferably 5 or more, more preferably 10 or more, further preferably 14 or more. Further, the upper limit of the HLB value is preferably 25 or less, more preferably 20 or less, further preferably 18 or less. The HLB value of the polyglycerol fatty acid ester (c-3) is preferably in the range of from 5 to 25, more preferably in the range of from 10 to 20, further preferably in the range of from 14 to 18.

The components (c-1) to (c-3) may be used individually or in combination. The amount of the film forming auxiliary (C) used is in the range of from 0.05 to 50 parts by mass, preferably in the range of from 0.1 to 20 parts by mass, relative to 100 parts by mass of the below-mentioned urethane resin (A) (= solid content).

The urethane resin (A) can be dispersed in the below-mentioned water (B), and, for example, a urethane resin having a hydrophilic group, such as an anionic group, a cationic group, or a nonionic group; a urethane resin which is forcibly dispersed in the water (B) using an emulsifying agent can be used. These urethane resins may be used individually or in combination. Of these, from the viewpoint of the production stability and water dispersion stability, a urethane resin having a hydrophilic group is preferably used, and a urethane resin having an anionic group is more preferably used.

As a method for obtaining the urethane resin having an anionic group, for example, there can be mentioned a method using as a raw material at least one compound selected from the group consisting of a glycol compound having a carboxyl group and a compound having a sulfonyl group.

As the glycol compound having a carboxyl group, for example, 2,2-dimethylolpropionic acid, 2,2-dimethylolbutanoic acid, 2,2-dimethylolbutyric acid, 2,2-dimethylolpropionic acid or 2,2-valeric acid can be used. These compounds may be used individually or in combination.

As the compound having a sulfonyl group, for example, there can be used 3,4-diaminobutanesulfonic acid, 3,6-diamino-2-toluenesulfonic acid, 2,6-diaminobenzenesulfonic acid, N-(2-aminoethyl)-2-aminosulfonic acid, N-(2-aminoethyl)-2-aminoethylsulfonic acid, N-2-aminoethane-2-aminosulfonic acid, N-(2-aminoethyl)-β-alanine; or salts thereof. These compounds may be used individually or in combination.

When using the raw material for producing the urethane resin having an anionic group, from the viewpoint of obtaining still further excellent water dispersion stability, the amount of the raw material used is preferably in the range of from 0.1 to 5% by mass, more preferably in the range of from 0.5 to 4% by mass, further preferably in the range of from 1 to 3% by mass, based on the total mass of the raw materials for the urethane resin.

The carboxyl group and sulfonyl group may be neutralized partially or entirely with a basic compound in the urethane resin composition. As the basic compound, for example, there can be used ammonia; an organic amine, such as triethylamine, pyridine, or morpholine; an alkanolamine, such as monoethanolamine or dimethylethanolamine; or a metal basic compound containing sodium, potassium, lithium or calcium.

As a method for obtaining the urethane resin having a cationic group, for example, there can be mentioned a method using one or two or more compounds having an amino group as a raw material.

As the compound having an amino group, for example, there can be used a compound having a primary or secondary amino group, such as triethylenetetramine or diethylenetriamine; a compound having a tertiary amino group, e.g., an N-alkyldialkanolamine, such as N-methyldiethanolamine or N-ethyldiethanolamine, or an N-alkyldiaminoalkylamine, such as N-methyldiaminoethylamine or N-ethyldiaminoethylamine. These compounds may be used individually or in combination.

As the emulsifying agent which can be used for obtaining the urethane resin forcibly dispersed in the water (B), for example, there can be used a nonionic emulsifying agent, such as polyoxyethylene nonylphenyl ether, polyoxyethylene lauryl ether, polyoxyethylene styrylphenyl ether, polyoxyethylene sorbitol tetraoleate, or a polyoxyethylene-polyoxypropylene copolymer; an anionic emulsifying agent, such as a fatty acid salt, e.g., sodium oleate, or an alkylsulfate salt, an alkylbenzenesulfonic acid salt, an alkylsulfosuccinic acid salt, a naphthalanesulfonic acid salt, a polyoxyethylene alkylsulfuric acid salt, an alkaneslfonate sodium salt, or an alkyl diphenyl ether sulfonic acid sodium salt; a cationic emulsifying agent, such as an alkylamine salt, an alkyltrimethylammonium salt, or an alkyldimethylbenzylammonium salt. These emulsifying agents may be used individually or in combination.

With respect to the urethane resin (A), specifically, for example, a reaction product of a polyisocyanate (a1), a polyol (a2), and a raw material used for producing the above-mentioned urethane resin having a hydrophilic group can be used.

As the polyisocyanate (a1), for example, there can be used an aromatic polyisocyanate, such as phenylene diisocyanate, toluene diisocyanate, diphenylmethane diisocyanate, xylylene diisocyanate, naphthalene diisocyanate, polymethylene polyphenyl polyisocyanate, or carbodiimidated diphenylmethane polyisocyanate; an aliphatic polyisocyanate or alicyclic polyisocyanate, such as hexamethylene diisocyanate, lysine diisocyanate, cyclohexane diisocyanate, isophorone diisocyanate, dicyclohexylmethane diisocyanate, xylylene diisocyanate, tetramethylxylylene diisocyanate, dimer acid diisocyanate, or norbornene diisocyanate. These polyisocyanates may be used individually or in combination.

From the viewpoint of the production stability and mechanical physical properties of a film to be obtained, the amount of the polyisocyanate (a1) used is preferably in the range of from 5 to 40% by mass, more preferably in the range of from 10 to 30% by mass, based on the total mass of the raw materials for the urethane resin (A).

As the polyol (a2), for example, polyether polyol, polyester polyol, polyacryl polyol, polycarbonate polyol, polybutadiene polyol can be used. These polyols may be used individually or in combination.

From the viewpoint of the mechanical strength of a film to be obtained, the polyol (a2) preferably has a number average molecular weight in the range of from 500 to 50,000, more preferably in the range of from 800 to 10,000. The number average molecular weight of the polyol (a2) indicates a value measured by a gel permeation chromatography (GPC) method.

In the polyol (a2), if necessary, a chain extender (a2-1) having a number average molecular weight of less than 500 (preferably in the range of from 50 to 450) may be used. As the chain extender (a2-1), for example, there can be used a chain extender having a hydroxyl group, such as ethylene glycol, diethylene glycol, triethylene glycol, propylene glycol, dipropylene glycol, 1,3-propanediol, 1,3-butanediol, 1,4-butanediol, hexamethylene glycol, saccharose, methylene glycol, glycerol, sorbitol, bisphenol A, 4,4'-dihydroxydiphenyl, 4,4'-dihydroxydiphenyl ether, or trimethylolpropane; a chain extender having an amino group, such as ethylenediamine, 1,2-propanediamine, 1,6-hexamethylenediamine, piperazine, 2,5-dimethylpiperazine, isophoronediamine, 1,2-cyclohexanediamine, 1,3-cyclohexanediamine, 1,4-cyclohexanediamine, 4,4'-dicyclohexylmethanediamine, 3,3'-dimethyl-4,4'-dicyclohexylmethanediamine, 1,4-cyclohexanediamine, or hydrazine. These chain extenders may be used individually or in combination.

When the chain extender (a2-1) is used, from the viewpoint of the mechanical strength of a film to be obtained, the amount of the chain extender (a2-1) used is preferably in the range of from 0.5 to 5% by mass, more preferably in the range of from 1 to 3% by mass, based on the total mass of the raw materials for the urethane resin (A).

With respect to the method for producing the urethane resin (A), for example, there can be mentioned a method in which the polyol (a2), the raw material used for producing the urethane resin having a hydrophilic group, the chain extender (a2-1), and the polyisocyanate (a1) are charged at the same time and subjected to reaction. The reaction is conducted, for example, at 50 to 100°C for 3 to 10 hours.

In producing the urethane resin (A), the molar ratio of the isocyanate group of the polyisocyanate (a1) to the total of the hydroxyl group of the polyol (a2), the hydroxyl group and amino group of the raw material used for producing the urethane resin having a hydrophilic group, and the hydroxyl group and amino group of the chain extender (a2-1) [isocyanate group/(hydroxyl group and amino group)] is preferably in the range of from 0.8 to 1.2, more preferably in the range of from 0.9 to 1.1.

In producing the urethane resin (A), it is preferred that the isocyanate group remaining in the urethane resin (A) is deactivated. When deactivating the isocyanate group, an alcohol having one hydroxyl group, such as methanol, is preferably used. The amount of the alcohol used is preferably in the range of from 0.001 to 10 parts by mass, relative to 100 parts by mass of the urethane resin (A).

Further, when producing the urethane resin (A), an organic solvent may be used. As the organic solvent, for example, there can be used a ketone compound, such as acetone or methyl ethyl ketone; an ether compound, such as tetrahydrofuran or dioxane; an acetate compound, such as ethyl acetate or butyl acetate; a nitrile compound, such as acetonitrile; an amide compound, such as dimethylformamide or N-methylpyrrolidone. These organic solvents may be used individually or in combination. It is preferred that the organic solvent is finally removed by a distillation method.

From the viewpoint of stably retaining the foam generated by the below-mentioned mechanical foaming and causing the density of the foamed layer (ii) to be in a preferred range so as to stably obtain excellent hand feeling, the flow starting temperature of the urethane resin (A) is preferably 80°C or higher, more preferably in the range of from 80 to 220°C.

As a method for controlling the flow starting temperature of the urethane resin (A), there can be mentioned a method of controlling the flow starting temperature depending mainly on the type of the polyol (a2) which is the raw material for the below-mentioned urethane resin (A), the amount of the chain extender (a2-1) used, and the type of the polyisocyanate (a1). As a method of controlling the flow starting temperature to be higher, for example, there can be mentioned the use of a highly crystalline polyol, such as polycarbonate polyol, as the polyol (a2), an increase of the amount of the chain extender (a2-1) used, and the use of a highly crystalline polyisocyanate, such as 4,4'-diphenylmethane diisocyanate or dicyclohexylmethane diisocyanate, as the polyisocyanate (a1). Further, as a method of controlling the flow starting temperature to be lower, for example, there can be mentioned the use of a poorly crystalline polyol, such as polyoxypropylene glycol, as the polyol (a2), a reduction of the amount of the chain extender (a2-1) used, and the use of a poorly crystalline polyisocyanate, such as toluene diisocyanate or isophorone diisocyanate, as the polyisocyanate (a1). Accordingly, the flow starting temperature of the urethane resin (A) can be controlled by appropriately selecting a method from these methods.

As a method for measuring the flow starting temperature of the urethane resin (A), for example, there can be mentioned a method in which the urethane resin composition is applied to release paper (thickness of the applied composition: 150 µm), and dried by means of a hot-air dryer at 70°C for 4 minutes and further at 120°C for 2 minutes to obtain a dried material, and, with respect to the obtained dried material, a flow starting temperature is measured using Flow Tester "CFT-500A", manufactured by Shimadzu Corporation (using a dice having a bore diameter of 1 mm and a length of 1 mm; load: 98 N; temperature increase rate: 3°C/minute).

As the water (B), for example, ion-exchanged water, distilled water, or tap water can be used. Of these, ion-exchanged water having less impurities is preferably used. From the viewpoint of the working properties, application properties, and storage stability, the amount of the water (B) contained is preferably in the range of from 20 to 90% by mass, more preferably in the range of from 40 to 80% by mass, based on the mass of the urethane resin composition.

From the viewpoint of the water dispersion stability and working properties, the mass ratio of the urethane resin (A) to the water (B) [(A)/(B)] is preferably in the range of from 5/95 to 70/30, more preferably in the range of from 10/90 to 60/40.

The urethane resin composition of the invention contains the above-mentioned urethane resin (A), water (B), film forming auxiliary (C) and a surfactant (D) as specified in claim 1, i.e. a stearic acid salt, as essential components, but may contain an additional additive if necessary.

With respect to the additional additive, for example, there can be used a crosslinking agent, a neutralizing agent, a thickener, a urethane-forming reaction catalyst, a filler, a pigment, a dye, a flame retardant, a leveling agent or an anti-blocking agent. These additives may be used individually or in combination.

With respect to the surfactant, from the viewpoint of preventing the foam generated by mechanical foaming from disappearing so as to obtain further excellent crack resistance and hand feeling, a surfactant (D) having a hydrophobic portion having 10 or more carbon atoms is used, namely a stearic acid salt.

In combination with the aforementioned surfactant (D) (i.e. stearic acid salt), for example, a surfactant represented by the formula (2) below, a fatty acid salt, a succinic acid salt, a sulfosuccinic acid salt, an octadecylsulfosuccinic acid salt or a sulfosuccinic acid ester can be used. These surfactants may be used individually or in combination.

[Chem. 2]

**RCO₂⁻X**⁺ **(2)**

In the formula (2), R represents a linear or branched alkyl group having 10 to 20 carbon atoms, and X represents Na, K, NH₄, morpholine, ethanolamine, or triethanolamine.

With respect to the surfactant used in combination with the aforementioned surfactant (D) i.e. stearic acid salt, among those mentioned above, from the viewpoint of obtaining still further excellent retention of foam, the surfactant represented by the formula (2) above is preferably used, and the surfactant having a linear alkyl group having 13 to 19 carbon atoms is more preferably used.

From the viewpoint of obtaining still further excellent retention of foam, the amount of the surfactant (D) used is in the range of from 0.01 to 30 parts by mass, preferably in the range of from 0.1 to 20 parts by mass, relative to 100 parts by mass of the urethane resin (A) (= solid content).

The crosslinking agent is used for the purpose of improving the mechanical strength of the foamed layer (ii), and, for example, a polyisocyanate crosslinking agent, an epoxy crosslinking agent, a melamine crosslinking agent or an oxazoline crosslinking agent can be used. These crosslinking agents may be used individually or in combination. When the crosslinking agent is used, the amount of the crosslinking agent used is, for example, preferably in the range of from 0.01 to 100 parts by mass, more preferably in the range of from 0.1 to 50 parts by mass, further preferably in the range of from 0.5 to 30 parts by mass, relative to 100 parts by mass of the urethane resin (A) (= solid content).

The layered product of the invention is described below.

The layered product has at least a substrate (i) and a foamed layer (ii) which is formed from the above-described urethane resin composition.

As the substrate (i), for example, there can be used a fiber substrate, such as nonwoven fabric, woven fabric, or knitted fabric, each formed from a polyester fiber, a polyethylene fiber, a nylon fiber, an acrylic fiber, a polyurethane fiber, an acetate fiber, a rayon fiber, a polylactate fiber, cotton, linen, silk, wool, a glass fiber, a carbon fiber or a mixed fiber thereof; a substrate obtained by impregnating the above-mentioned nonwoven fabric with a resin, such as a polyurethane resin; a substrate obtained by further providing the above-mentioned nonwoven fabric with a porous layer; or a resin substrate, such as a thermoplastic urethane (TPU).

A method for producing the layered product of the invention is described below.

As a method for producing the layered product, for example, there can be mentioned:
(X) a method in which the urethane resin composition is foamed to obtain a foamed liquid, and the obtained foamed liquid is applied onto release paper, and dried, and bonded to the above-mentioned substrate (i),
(Y) a method in which the urethane resin composition is foamed to obtain a foamed liquid, and the obtained foamed liquid is applied onto a skin layer formed on release paper, and dried, and bonded to the substrate (i), and
(Z) a method in which the urethane resin composition is foamed to obtain a foamed liquid, and the obtained foamed liquid is applied onto the substrate (i), and dried, and, if necessary, a skin layer (iii) formed on release paper is bonded onto the resultant substrate.

As a method for foaming the urethane resin composition to obtain a foamed liquid, for example, there can be mentioned manual stirring, and mechanical foaming using a mixer, such as a mechanical mixer. Of these, from the viewpoint of obtaining a foamed liquid with ease, a method using a mixer is preferred. When using a mixer, for example, there can be mentioned a method in which the urethane resin composition is stirred at 500 to 3,000 rpm for 10 seconds to 10 minutes. In this case, from the viewpoint of obtaining the foamed layer (ii) having excellent hand feeling, the foamed liquid obtained after foaming preferably has a volume 1.3 to 7 times, more preferably 1.2 to 2 times the volume of the urethane resin composition before being foamed.

As a method for applying the obtained foamed liquid to the substrate (i), for example, there can be mentioned a method using a roll coater, a knife coater, a comma coater or an applicator.

As a method for drying the applied material, for example, there can be mentioned a method in which the applied material is dried at a temperature of 60 to 130°C for 30 seconds to 10 minutes.

The foamed layer (ii) obtained by the above-mentioned method has a thickness of, for example, 5 to 300 µm.

From the viewpoint of obtaining still further excellent hand feeling, the foamed layer (ii) preferably has a density of 200 to 1,000 kg/m³, more preferably in the range of from 400 to 800 kg/m³. The density of the foamed layer (ii) indicates a value determined by dividing a value, which is obtained by subtracting the weight of the substrate (i) per 10 cm square from the weight of the layered product per 10 cm square, by the thickness of the foamed layer (ii).

The skin layer (iii) can be formed by a known method from a known material, and, for example, a solvent urethane resin, an aqueous urethane resin, a silicone resin, a polypropylene resin or a polyester resin can be used. In the case of placing importance on soft hand feeling and excellent heat resistance and hydrolytic resistance, a polycarbonate urethane resin is preferably used. Further, for reducing the use of DMF to protect the environment, an aqueous polycarbonate urethane resin is more preferably used.

On the skin layer (iii), if necessary, a surface treatment layer (iv) may be further formed for the purpose of improving the scuff resistance and imparting gloss. The surface treatment layer (iv) can be formed by a known method from a known material.

As described above, the urethane resin composition of the invention contains water and is environmentally friendly. Further, the urethane resin composition of the invention is advantageous in that a film having excellent crack resistance and excellent hand feeling can be formed from the composition even when mechanically foaming the composition. Therefore, the urethane resin composition of the invention can be advantageously used as a material for a synthetic leather, and can be particularly advantageously used as a foamed layer for a synthetic leather.

### Examples

Hereinbelow, the present invention will be described in more detail with reference to the following Examples.

### [Example 1]

To 100 parts by mass of a polyether polyurethane dispersion ("HYDRAN WLS-120AR", manufactured by DIC Corporation; solid content: 50% by mass; hereinafter, abbreviated to "PUD (A-1)") were added 2 parts by mass of a thickener ("Borch Gel ALA", manufactured by Borchers GmbH), 3 parts by mass of ammonium stearate, 4 parts by mass of a crosslinking agent ("CARBODILITE SV-02", manufactured by Nisshinbo Chemical Inc.), and 3 parts by mass of polyoxyethylene lauryl ether (number of moles added of the structure represented by the formula (1): 100), and the resultant mixture was stirred using a mechanical mixer at 3,000 rpm so that the mixture contained air therein, thereby obtaining a foamed liquid having a volume 1.5 times the initial volume.

The obtained foamed liquid was applied to release paper, and dried at 80°C for 3 minutes to form a urethane foamed layer having a thickness of 300 µm, and the formed layer was bonded to polyester fiber nonwoven fabric to obtain a synthetic leather.

### [Examples 2 to 7 and Comparative Example 1]

Synthetic leathers were individually obtained in substantially the same manner as in Example 1 except that the type of the urethane resin (A) used and the type and/or amount of the film forming auxiliary (C) used were changed as shown in Tables 1 and 2.

### [Evaluation method for retention of foam]

In the Examples and Comparative Example, the obtained foamed liquid was allowed to stand for 2 hours, and the foamed liquids before and after allowed to stand were examined by means of a scanning electron microscope (SEM) to check the form of foam, and evaluated according to the following criteria.

"T": A change in the size of bubbles in the foam is small, and a change in the volume of the foam or the density is small.

"F": The size of bubbles in the foam is markedly increased, or the foam disappears and the density is increased.

### [Evaluation method for crack resistance]

The synthetic leather obtained in each of the Examples and Comparative Example was observed in respect of the appearance to check whether a crack was formed or not. A synthetic leather having no crack was rated "T", and a synthetic leather in which a crack was found was rated "F".

### [Evaluation method for hand feeling]

The synthetic leather obtained in each of the Examples and Comparative Example was touched by hands, and evaluated according to the following criteria.
"T": Flexible and elastic.
"F": Poorly flexible and hard.

**[Table 1]**

| Table 1 | | Example 1 | Example 2 | Example 3 | Example 4 |
|---|---|---|---|---|---|
| Urethane resin (A) | | PUD (A-1) | PUD (A-1) | PUD (A-2) | PUD (A-2) |
| Film forming auxiliary (C) | | Polyoxyethylene lauryl ether | Polyoxyethylene sorbitan monolaurate | Polyglyceryl monolaurate | Polyoxyethylene lauryl ether |
| | Number of moles added of structure represented by formula (1) | 100 | About 80 | | 100 |
| | HLB Value | | | 15.5 | |
| | Amount of (C) used (relative to 100 parts by mass of (A) (solid content)) | 3 | 3 | 3 | 8 |
| Surfactant (D) | | Ammonium stearate | Ammonium stearate | Ammonium stearate | Ammonium stearate |
| Evaluation of retention of foam | | T | T | T | T |
| Evaluation of crack resistance | | T | T | T | T |
| Evaluation of hand feeling | | T | T | T | T |

**[Table 2]**

| Table 2 | | Example 5 | Example 6 | Example 7 | Comparative Example 1 |
|---|---|---|---|---|---|
| Urethane resin (A) | | PUD (A-3) | PUD (A-3) | PUD (A-1) | PUD (A-1) |
| Film forming auxiliary (C) | | Polyoxyethylene sorbitan monolaurate | Polyglyceryl monolaurate | Polyoxyethylene lauryl ether | |
| | Number of moles added of structure represented by formula (1) | About 80 | | 100 | |
| | HLB Value | | 15.5 | | |
| | Amount of (C) used (relative to 100 parts by mass of (A) (solid content)) | 8 | 1 | 1 | 0 |
| Surfactant (D) | | Ammonium stearate | Ammonium stearate | Ammonium stearate | Ammonium stearate |
| Evaluation of retention of foam | | T | T | T | F |
| Evaluation of crack resistance | | T | T | T | F |
| Evaluation of hand feeling | | T | T | T | F |

The abbreviations shown in Tables 1 and 2 are as follows.
"PUD (A-2)": Polycarbonate polyurethane dispersion ("HYDRAN WLS-110AR", manufactured by DIC Corporation; solid content: 50% by mass)
"PUD (A-3)": Ester polyurethane dispersion ("HYDRAN ADS-110", manufactured by DIC Corporation; solid content: 50% by mass)

It was found that, in each of Examples 1 to 7 which correspond to the urethane resin composition of the present invention, a synthetic leather having excellent retention of foam, crack resistance, and hand feeling was obtained.

On the other hand, in Comparative Example 1 which corresponds to an embodiment in which the film forming auxiliary (C) is not used, all the retention of foam, crack resistance, and hand feeling were poor.

## Claims

1. A urethane resin composition containing a urethane resin (A), water (B), a film forming auxiliary (C), and a surfactant (D), wherein
the film forming auxiliary (C) is at least one member selected from the group consisting of a polyoxyethylene alkyl ether (c-1), a polyoxyethylene sorbitan fatty acid ester (c-2), and a polyglycerol fatty acid ester (c-3),
the amount of the film forming auxiliary (C) used is in the range of from 0.05 to 50 parts by mass, relative to 100 parts by mass of the urethane resin (A),
the surfactant (D) is a stearic acid salt,
and the amount of the surfactant (D) used is in the range of from 0.01 to 30 parts by mass, relative to 100 parts by mass of the urethane resin (A).

2. The urethane resin composition according to claim 1, wherein the number of moles added of the structure represented by the following formula (1) in the polyoxyethylene alkyl ether (c-1) is 30 or more:

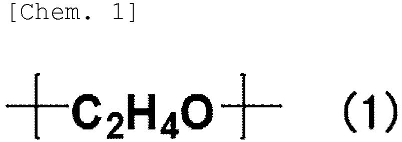

3. The urethane resin composition according to claim 1 or 2, wherein the number of moles added of the structure represented by the formula (1) above in the polyoxyethylene sorbitan fatty acid ester (c-2) is 30 or more.

4. The urethane resin composition according to any one of claims 1 to 3, wherein the polyglycerol fatty acid ester (c-3) has an HLB value of 5 or more.

5. The urethane resin composition according to any one of claims 1 to 4, wherein the urethane resin (A) has an anionic group.

6. A layered product having at least a substrate (i) and a foamed layer (ii) which is formed from the urethane resin composition according to any one of claims 1 to 5.

7. The layered product according to claim 6, wherein the foamed layer (ii) is formed by mechanically foaming the urethane resin composition.

## Patentansprüche

1. Urethanharzzusammensetzung, enthaltend ein Urethanharz (A), Wasser (B), ein Filmbildungshilfsmittel (C) und ein Tensid (D), wobei
das Filmbildungshilfsmittel (C) mindestens ein Element ist, das aus der Gruppe ausgewählt ist, die aus einem Polyoxyethylenalkylether (c-1), einem Polyoxyethylensorbitanfettsäureester (c-2) und einem Polyglycerinfettsäureester (c-3) besteht,
die Menge des verwendeten Filmbildungshilfsmittels (C) im Bereich von 0,05 bis 50 Masseteilen liegt, bezogen auf 100 Masseteile des Urethanharzes (A),
das Tensid (D) ein Stearinsäuresalz ist,
und die Menge des verwendeten Tensids (D) im Bereich von 0,01 bis 30 Masseteilen liegt, bezogen auf 100 Masseteile des Urethanharzes (A).

2. Urethanharzzusammensetzung nach Anspruch 1, wobei die Anzahl der zugesetzten Mole der durch die folgende Formel (1) dargestellten Struktur in dem Polyoxyethylenalkylether (c-1) 30 oder mehr beträgt:

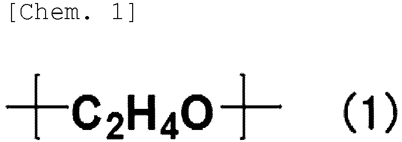

3. Urethanharzzusammensetzung nach Anspruch 1 oder 2, wobei die Anzahl der zugesetzten Mole der durch die obige Formel (1) dargestellten Struktur in dem Polyoxyethylensorbitanfettsäureester (c-2) 30 oder mehr beträgt.

4. Urethanharzzusammensetzung nach einem der Ansprüche 1 bis 3, wobei der Polyglycerinfettsäureester (c-3) einen HLB-Wert von 5 oder mehr aufweist.

5. Urethanharzzusammensetzung nach einem der Ansprüche 1 bis 4, wobei das Urethanharz (A) eine anionische Gruppe aufweist.

6. Geschichtetes Produkt mit mindestens einem Substrat (i) und einer geschäumten Schicht (ii), die aus der Urethanharzzusammensetzung nach einem der Ansprüche 1 bis 5 gebildet ist.

7. Geschichtetes Produkt nach Anspruch 6, wobei die geschäumte Schicht (ii) durch mechanisches Aufschäumen der Urethanharzzusammensetzung gebildet wird.

## Revendications

1. Composition de résine uréthane contenant une résine uréthane (A), de l'eau (B), un auxiliaire filmogène (C) et un agent tensioactif (D), dans laquelle
l'auxiliaire filmogène (C) est au moins un élément choisi dans le groupe constitué d'un éther d'alkyle de polyoxyéthylène (c-1), d'un ester d'acide gras de polyoxyéthylène sorbitane (c-2) et d'un ester d'acide gras de polyglycérol (c-3),
la quantité d'auxiliaire filmogène (C) utilisée est comprise entre 0,05 et 50 parties en masse, par rapport à 100 parties en masse de la résine uréthane (A),
l'agent tensioactif (D) est un sel d'acide stéarique,
et la quantité de l'agent tensioactif (D) utilisée est comprise entre 0,01 et 30 parties en masse, par rapport à 100 parties en masse de la résine uréthane (A).

2. Composition de résine uréthane selon la revendication 1, dans laquelle le nombre de moles ajoutées de la structure représentée par la formule suivante (1) dans l'éther d'alkyl de polyoxyéthylène (c-1) est de 30 ou plus :

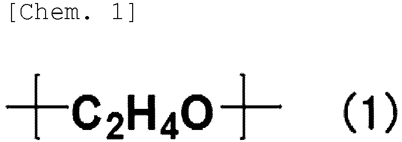

3. Composition de résine uréthane selon la revendication 1 ou 2, dans laquelle le nombre de moles ajoutées de la structure représentée par la formule (1) ci-dessus dans l'ester d'acide gras de polyoxyéthylène sorbitane (c-2) est de 30 ou plus.

4. Composition de résine uréthane selon l'une des revendications 1 à 3, dans laquelle l'ester d'acide gras de polyglycérol (c-3) a une valeur HLB de 5 ou plus.

5. Composition de résine uréthane selon l'une des revendications 1 à 4, dans laquelle la résine uréthane (A) possède un groupe anionique.

6. Produit stratifié comportant au moins un substrat (i) et une couche moussée (ii) formée à partir de la composition de résine uréthane selon l'une quelconque des revendications 1 à 5.

7. Produit stratifié selon la revendication 6, dans lequel la couche moussée (ii) est formée par moussage mécanique de la composition de résine uréthane.
